Europäisches Patentamt

(19) European Patent Office

Office européen des brevets

(11) Publication number: **0 169 648**

A2

(12) # EUROPEAN PATENT APPLICATION

(21) Application number: 85304184.6

(22) Date of filing: 12.06.85

(51) Int. Cl.⁴: **H 01 B 13/14**

(30) Priority: 15.06.84 GB 8415310

(43) Date of publication of application:
29.01.86 Bulletin 86/5

(84) Designated Contracting States:
BE DE FR NL SE

(71) Applicant: DELTA ENFIELD LIMITED
Millmarsh Lane Brimsdown
Enfield Middlesex, EN3 7QB(GB)

(72) Inventor: Vale, John Philip
1 Village View Millbrook
Stalybridge Cheshire(GB)

(72) Inventor: Schofield, John Alan
14 Quarry Rise
Stalybridge Cheshire(GB)

(74) Representative: Day, Jeremy John et al,
REDDIE & GROSE 16 Theobalds Road
London, WC1X 8PL(GB)

(54) **Manufacture of electric cables.**

(57) A process for manufacturing electric cable of the type comprising one or more conductors embedded in a sheath of dielectric material, wherein the dielectric material is provided with continuous air spaces or cells extending along the length of the cable, comprises first embedding the conductor or conductors (1) in a sheath of dielectric material (6) comprising a central core (7) with a plurality of radial ribs (8) extending longitudinally of the core along the whole length thereof and then forming a tube (9) of dielectric material (10) over the thus embedded conductor or conductors (1) such that the tube contacts the outer ends of the ribs (8).

FIG.1

EP 0 169 648 A2

## MANUFACTURE OF ELECTRIC CABLES

This invention relates to electric cables and to methods of and means for manufacturing the same and, in particular, relates to electric cables of the type having one or more conductors sheathed within a dielectric coating, for example, of plastics material, wherein the dielectric coating is provided with continuous air spaces or cells running the length of the cable.

Specification GB-A-811703 discloses a method of manufacturing such cables which comprises extruding the dielectric material from a non-rotating die having an outer annular gap of a size corresponding to the outer dimension of the cable, such gap being connected by a plurality of radial gaps to a central cavity larger than and through which the conductor passes at a controlled speed and having between each radial gap orifices through which air can be forced under pressure, in which there is forced through the gaps and cavity a heated thermoplastic insulant at such a temperature and rate that the same will set soon after emerging from the die and in which at the same time air is forced under a controlled pressure through each of the plurality of orifices, the air pressure being controlled at such a pressure as to maintain such air spaces between each of the radial ribs that the insulated cable sets with the conductor embedded in an annular sheath of the insulant connected by radial ribs of insulant to the outer tubular envelope of insulant of a size corresponding to the outer annular gap.

While this process has been satisfactorily used for the manufacture of cables, it is very difficult to control and, in particular, the control of the air pressure necessary to ensure that the outer tubular envelope does not sag or expand on exit from the die is difficult. For the manufacture of large cables, the problem arises that the weight of the outer tubular envelope may cause the ribs to buckle, thereby distorting the exterior of the cable.

- 2 -

This invention provides a method for the manufacture of a cable of the type described hereinbefore which generally obviates these disadvantages.

According to the invention a process for manufacturing an electric cable of the type comprising one or more conductors embedded in a sheath of dielectric material wherein the dielectric material is provided with continuous air spaces or cells running along the length of the cable comprises first embedding the conductor or conductors in a sheath of dielectric material comprising a central core with a plurality of radial ribs extending longitudinally of the core along the whole length thereof and then forming a tube of dielectric material over the thus embedded conductor or conductors such that the tube contacts the outer ends of the ribs.

It will be seen that by use of the process of the invention there is no need to support the cells or air spaces by passing air thereinto under pressure so that problems of controlling the air flow do not arise and moreover, since the material of the ribs is not in a softened condition when the tube is formed thereover there is no possibility that the ribs will buckle under the weight of the outer tube.

The conductor embedded in the ribbed sheath may be produced by passing the conductor at a controlled speed through a non-rotating extrusion die having a die gap, for example, of star-shaped configuration, while simultaneously forcing through the extrusion die a heated thermoplastic dielectric material at such a temperature and rate that the same will set soon after emerging from the die. The outer tube may be produced by extruding a tube, for example, into a vacuum trough, while passing the sheathed conductor through the centre of the tube and allowing the tube to shrink slightly to come into contact with the ends of the ribs on the sheathed conductor.

Alternatively, the outer tube may be a preformed tube of heat-recoverable thermoplastic dielectric material which is subsequently heat shrunk onto the ends of the ribs.

The invention, in addition to avoiding the difficulties associated with the prior art process of forming the whole sheath in a single extrusion step, provides a further advantage in that it becomes possible to use two different dielectric materials for the inner ribbed sheath and for the outer tube. This may be of advantage in some applications. Moreover, by forming the outer tube separately from the rest of the sheath it is possible to produce cables with much more consistent circularity.

The dielectric material used for sheathing the conductor may be any of those materials normally used in the art, for example, polyethylene, poly-vinyl chloride or other synthetic plastics material having the desired physical and electrical characteristics.

The cable will normally be covered with a conventional outer metal conductor, usually woven wire or braiding but may be covered by a winding of metal or metal/plastic-laminate tape with or without braid combinations.

The invention will now be described in greater detail by way of example with reference to the drawings in which :-

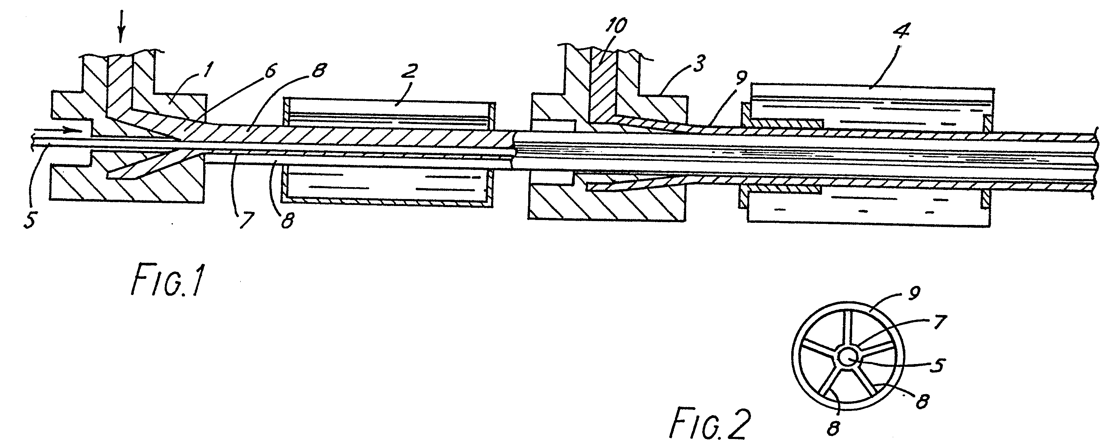

Fig. 1 is a schematic representation of one form of apparatus for carrying out the invention, and

Fig. 2 is a cross-section through one form of sheathed cable according to the invention.

As shown in the drawings, the apparatus of the invention comprises an extrusion die 1 having a star-shaped die cavity, a cooling bath 2, a second extrusion die 3 having an annular die cavity and a vacuum sizing and cooling trough 4.

A conductor 5 is passed centrally through the die cavity of extrusion die 1 and a sheath of dielectric material 6 is extruded around the conductor 5 to embed the conductor in a sheath of dielectric material 6 comprising a central core 7 and five equally spaced radial ribs 8 extending longitudinally of the core 7 along the whole length thereof.

After passage through cooling bath 2, the sheathed conductor 5, 6 is passed centrally through the die gap of extrusion die 3 and a tube 9 of dielectric material 10 is simultaneously extruded through the die 3.

In vacuum sizing and cooling trough 4, the tube 9 shrinks slightly to come into close contact with the ends of the ribs 8.

On exit from the trough 4 an outer covering may be applied around the tube 9.

C L A I M S

1. A process for manufacturing electric cable of the type comprising one or more conductors embedded in a sheath of dielectric material, wherein the dielectric material is provided with continuous air spaces or cells extending along the length of the cable, which comprises first embedding the conductor or conductors in a sheath of dielectric material comprising a central core with a plurality of radial ribs extending longitudinally of the core along the whole length thereof and then forming a tube of dielectric material over the thus embedded conductor or conductors such that the tube contacts the outer ends of the ribs.

2. A process according to claim 1, wherein the conductor embedded in the ribbed sheath is produced by passing the conductor at controlled speed through a non-rotating extrusion die having a die gap of star-shaped configuration, whilst simultaneously forcing through the extrusion die a heated thermoplastic dielectric material at such a temperature and rate that the material will set soon after emergence from the die.

3. A process according to claim 1 or claim 2, wherein the outer tube is produced by extruding a tube while passing the sheathed conductor through the centre of the tube and allowing the tube to shrink to come into contact with the ends of the ribs on the sheathed conductor.

4. A process according to claim 3, wherein the tube is extruded into a vacuum trough.

5. A process according to any one of claims 1 to 3, wherein the outer tube is a preformed tube of heat recoverable thermoplastic dielectric material and the sheathed conductor is passed into the tube which is then heat shrunk onto the sheathed conductor.

0169648

- 6 -

6. Apparatus for carrying out a process according to claim 1, which comprises an extrusion die having a die gap for forming an extrusion comprising an annular core and a plurality of radial ribs extending longitudinally of the core, means for passing a conductor through the die gap to be embedded within the core of the extrusion from the die and means for passing the embedded conductor into a tube, whereby the tube contacts the ends of the ribs on the extrusion thereby forming a composite structure comprising a conductor embedded in a sheath of dielectric material, wherein the dielectric material is provided with continuous air spaces or cells running along the length of the structure.

7. Apparatus according to claim 6, wherein the means for introducing the embedded conductor into the tube comprises means for passing the conductor through the die gap of an extrusion die for extruding a tube around the embedded conductor.

8. Apparatus according to claim 7, which also includes a vacuum sizing trough for causing the extruded tube to shrink onto the ribs of the extrusion.

0169648

FIG.1

FIG.2